# EUROPÄISCHE PATENTSCHRIFT

(11) **EP 4 272 907 B1**
(45) Veröffentlichungstag und Bekanntmachung des Hinweises auf die Patenterteilung: **01.05.2024**
(21) Anmeldenummer: 23165789.1
(22) Anmeldetag: 31.03.2023
(51) Int. Cl.: B25J 9/16

(54) **VERFAHREN ZUR VERBESSERUNG EINES VORGEPLANTEN BEWEGUNGSABLAUFS FÜR DIE ANSTEUERUNG EINES ROBOTERS**
METHOD FOR IMPROVING A PREPLANNED MOVEMENT SEQUENCE FOR CONTROLLING A ROBOT
PROCÉDÉ D'AMÉLIORATION D'UN DÉROULEMENT DE MOUVEMENT PRÉPROGRAMMÉ POUR LA COMMANDE D'UN ROBOT

(30) Priorität: 02.05.2022 DE 102022110645
(43) Veröffentlichungstag der Anmeldung: 08.11.2023
(73) Patentinhaber: SICK AG, 79183 Waldkirch (DE)
(72) Erfinder: ERLEWEIN, Patrick, 79194 Heuweiler (DE); HANSEN, Christoph, 20535 Hamburg (DE); FRANZ, Max, 79254 Oberried (DE)
(74) Vertreter: Manitz Finsterwald Patent- und Rechtsanwaltspartnerschaft mbB

(56) Entgegenhaltungen:
- DE-A1-102013 110 905
- DE-A1-102014 007 624
- US-A1- 2022 105 634

## Beschreibung

Die Erfindung betrifft ein Verfahren zur Verbesserung eines vorgeplanten Bewegungsablaufs für die Ansteuerung eines Roboters, der im Rahmen einer Mensch-Roboter-Kollaboration betrieben wird.

Insbesondere im industriellen Umfeld können Roboter dazu verwendet werden, bestimmte Aufgaben zu verrichten. Dies betrifft insbesondere Aufgaben, bei denen besonders große Kräfte ausgeübt werden müssen und/oder die mit hoher Geschwindigkeit und Präzision auszuführen sind, vor allem dann, wenn die jeweilige Aufgabe sehr oft auf dieselbe Weise durchzuführen ist. Es gibt aber auch Aufgaben, die sich von einem Menschen besser ausführen lassen als von einem Roboter. Dies betrifft insbesondere Aufgaben, die schwer zu automatisieren sind, etwa weil sie Erfahrung und/oder eine hohe Anpassungsfähigkeit voraussetzen. Bei Prozessen, die sowohl Arbeiten der einen Art als auch Arbeiten der anderen Art umfassen, kann es daher zweckmäßig sein, wenn Menschen und Roboter zusammenarbeiten, um die jeweiligen Stärken möglichst effizient zu kombinieren.

Die Art der Zusammenarbeit kann dabei unterschiedlich ausfallen. Beispielsweise können sich die Arbeitsbereiche eines Roboters und eines Menschen lediglich überschneiden, wobei keine direkte Interaktion zwischen dem Roboter und dem Menschen stattfindet oder wobei eine Interaktion nur bei Stillstand des Roboters vorgesehen ist. Eine solche Form der Zusammenarbeit wird auch als Mensch-Roboter-Kooperation bezeichnet. Die Zusammenarbeit kann aber auch so weit gehen, dass eine direkte Interaktion bis hin zum planmäßigen Kontakt zwischen einem Menschen und einem Roboter erfolgt, etwa wenn der Mensch und der Roboter gleichzeitig an einem Werkstück arbeiten oder der Roboter handgeführt wird. Diese Art der Zusammenarbeit wird auch als Mensch-Roboter-Kollaboration bezeichnet. In Bezug auf die vorliegende Erfindung soll Mensch-Roboter-Kollaboration in einem eher weiten Sinne zu verstehen sein und alle der genannten Formen der Zusammenarbeit, also auch Mensch-Roboter-Kooperationen, umfassen.

Für bestimmte Aufgaben kann es zweckmäßig sein, für die Ansteuerung eines im Rahmen einer Mensch-Roboter-Kollaboration betriebenen Roboters einen Bewegungsablauf vorzuplanen. Ein solcher Bewegungsablauf kann dabei zum einen eine definierte Bewegungsbahn umfassen, entlang welcher sich der Roboter bewegen soll, um die jeweilige Aufgabe zu verrichten; dabei kann der Roboter grundsätzlich stationär sein und die Bewegungsbahn von einem bestimmten Teil des Roboters, z. B. dem mit einem Werkzeug versehenen Ende eines Roboterarms, durchlaufen werden oder der Roboter kann sich als Ganzes entlang der Bewegungsbahn bewegen, sie z. B. entlangfahren. Zum andern kann der Bewegungsablauf einen definierten Geschwindigkeitsverlauf umfassen, gemäß welchem jedem Punkt der Bewegungsbahn eine Geschwindigkeit zugeordnet ist, mit der sich der Roboter an dem jeweiligen Punkt bewegen soll. Durch den Bewegungsablauf wird also vollständig vorgegeben, an welcher Stelle im Raum sich der Roboter zu welchem Zeitpunkt seit Beginn des Durchlaufens des Bewegungsablaufs befinden soll. Das Vorplanen des Bewegungsablaufs umfasst das Definieren der Bewegungsbahn und des Geschwindigkeitsverlaufs. Zweckmäßigerweise wird schon bei der Planung berücksichtigt, auf welcher Bewegungsbahn sich der Roboter voraussichtlich möglichst ungestört und ohne Gefährdung anderer bewegen kann sowie in welchen Abschnitten der Bewegungsbahn voraussichtlich eine hohe Geschwindigkeit möglich ist und in welchen Abschnitten aus Vorsicht vor möglichen Kollisionen eine eher geringe Geschwindigkeit vorzuziehen ist.

Der Bewegungsablauf wird dabei idealerweise so vorgeplant, dass er einerseits hohen Anforderungen an die Sicherheit genügt, damit Kollisionen des Roboters insbesondere mit Menschen verhindert werden, und dass andererseits die auszuführende Aufgabe möglichst schnell erledigt wird, um eine hohe Produktivität und Wirtschaftlichkeit der Anwendung zu erzielen.

Die Vorplanung des Bewegungsablaufs beruht jedoch zwangsläufig auf Annahmen über den Ablauf der Durchführung der jeweiligen Aufgabe, die nicht unbedingt zutreffen. Das liegt nicht nur daran, dass die Praxis oftmals anders aussieht als die Theorie, sondern kann sich auch daraus ergeben, dass nicht jede Aufgabe monoton stets auf dieselbe Weise auszuführen ist. Denn gerade aufgrund der Interaktion zwischen Mensch und Roboter können sich die Zyklen einer wiederholt durchzuführenden Aufgabe voneinander unterscheiden, so dass sich erst durch mehrmaliges Bearbeiten der Aufgabe herausstellt, inwieweit die dem vorgeplanten Bewegungsablauf zugrunde liegenden Annahmen zutreffen.

Darüber hinaus ist bei einer Mensch-Roboter-Kollaboration in der Regel vorgesehen, dass der Roboter nicht dazu angesteuert wird, den vorgeplanten Bewegungsablauf unter allen Umständen auch tatsächlich entlang der definierten Bewegungsbahn und mit dem definierten Geschwindigkeitsverlauf zu durchlaufen. Denn aufgrund der hohen Anforderungen hinsichtlich der Sicherheit der beteiligten Menschen ist es wichtig, dass fortlaufend überwacht wird, ob die Gefahr einer Kollision oder eine sonstige Gefährdung besteht, und dass gegebenenfalls zur Vermeidung der Gefährdung spontan von dem vorgeplanten Bewegungsablauf abgewichen werden kann. Insofern stellt der geplante Bewegungsablauf lediglich einen Sollablauf dar.

Um den Bewegungsablauf ad hoc an die jeweiligen tatsächlich vorliegenden Gegebenheiten anzupassen, sind verschiedene Konzepte bekannt, die in der Regel umfassen, dass eine Umgebung des Roboters mittels Sensoreinrichtungen auf die Anwesenheit von Menschen oder sonstigen Objekten überwacht wird, um direkt auf Störungen reagieren zu können. Wenn auf diese Weise ein Objekt erfasst und festgestellt wird, dass für dieses Objekt ein Risiko einer Kollision mit dem Roboter besteht, kann vorgesehen sein, dass als Reaktion hierauf die Bewegungsbahn des Roboters so geändert wird, dass er ein Ausweichmanöver um das Objekt herum ausführt. Alternativ oder auch zusätzlich dazu kann vorgesehen sein, dass der Roboter spontan seine Geschwindigkeit reduziert, insbesondere sogar stehenbleibt. Um das Risiko einer Kollision besonders zuverlässig abschätzen zu können und falsche Alarme zu vermeiden, kann ferner vorgesehen sein, dass nicht nur die Positionen der Objekte erfasst werden, sondern auch ihre jeweilige Bewegung im Sinne eines Tracking nachverfolgt wird, um (zumindest in gewissem Maße) auch den weiteren Verlauf ihrer Bewegung vorhersagen und in die Entscheidung über das Auslösen einer Abweichung vom vorgeplanten Bewegungsablauf einbeziehen zu können.

Derartige Konzepte erfordern jeweils eine hohe Rechenleistung, da sie komplexe Berechnungen umfassen, was insbesondere daran liegt, dass ad hoc auf potentielle Gefährdungen reagiert werden und daher fortlaufend eine Vielzahl von Daten erfasst und verarbeitet werden muss. Zudem führen derartige Konzepte oftmals zu sehr plötzlichen Reaktionen auf erfasste Störungen. Abrupte Änderungen in der Bewegung des Roboters führen jedoch zu einem hohen Verschleiß. Nachteilig an solchen Konzepten ist ferner, dass durch ein Stehenbleiben des Roboters oder durch ein Ausweichmanöver die Produktivität sinkt. Darüber hinaus können derartige Reaktionen des Roboters bei einem mit dem Roboter zusammenarbeitenden Menschen auch für ein Gefühl der Unsicherheit sorgen, weil sich der Roboter aufgrund der Abweichung vom vorgeplanten Bewegungsablauf nicht erwartungsgetreu verhält. Insbesondere kann es für den Menschen schwer absehbar sein, unter welchen Umständen der Roboter wohin ausweicht. Das kann zu einer verringerten Akzeptanz des jeweiligen Konzepts führen. Eine möglichst fixe Bewegungsbahn kann dagegen dafür sorgen, dass sich der Mensch in der Zusammenarbeit mit dem Roboter wohl fühlt.

Aus DE 10 2013 110 905 A1 ist ein Planungsverfahren zur Erhöhung der Sicherheit bekannt, bei dem zulässige Prozessgeschwindigkeiten, die im Falle einer Kollision keinen großen Schaden verursachen, für Abschnitte des Bewegungsablaufs des Roboters anhand empirisch erfasster Daten ermittelt werden. US 2022/0 105 634 A1 offenbart ein Verfahren zur Erhöhung der Sicherheit eines Robotersystems, bei dem anhand einer mittels künstlicher Intelligenz ermittelten Wahrscheinlichkeit einer gefährlichen Situation die Bewegungsbahn und/oder der Geschwindigkeitsverlauf des Roboters verändert wird/werden. In DE 10 2014 007 624 A1 wird ein Verfahren zum Betreiben eines Roboters beschrieben, bei dem in Gefahrbereichen des Bewegungsablaufs des Roboters mittels eines zweiten Roboters eine zulässige Verfahrgeschwindigkeit bestimmt wird.

Aus DE 10 2013 110 901 A1 und DE 10 2013 110 905A1 sind Planungsverfahren zur Planung und Implementierung von Mensch-Roboter-Kollaborationsabläufen bekannt, bei denen eine als "Layout" bezeichnete Arbeitsumgebung des Roboters und ein Bewegungsplan für eine von dem Roboter durchzuführende Tätigkeit innerhalb des Layouts erfasst werden. Ferner ist ein Bewertungsmodul vorgesehen, das anhand von menschlichen Anatomiedaten, Geschwindigkeitsprofilen und Geometrien ein Verletzungsprofil bei einer möglichen Kollision eines Menschen mit dem Roboter erstellt. Anhand dieser Daten wird das Layout in unterschiedliche Zonen mit entsprechend der Kollaborationstätigkeit unterschiedlichen Bewegungsabschnitten unterteilt, wobei den Zonen unterschiedliche Risikoklassen zugeteilt werden. Hierbei spiegeln die Risikoklassen die Kollisionswahrscheinlichkeit und Verletzungsgefahr wieder. Es kann dabei vorgesehen sein, dass die Geschwindigkeit des Roboters in Abhängigkeit von den Risikoklassen vergrößert oder verringert wird. Allerdings erfolgt diese Anpassung der Geschwindigkeit nicht auf Grundlage empirischer Daten, die während des laufenden Betriebs des Roboters erfasst werden, sondern die Verbesserung des Bewegungsplans basiert auf einem Modell, das die genannten menschlichen Anatomiedaten, Geschwindigkeitsprofilen und Geometrien umfasst. Dadurch entsteht ein Mehraufwand bei der Bahnplanung und Roboterprogrammierung und die Umsetzung setzt eine hohe Rechenleistung, insbesondere unter Verwendung zusätzlicher Hardware, voraus. Zudem ist nicht auszuschließen, dass das zugrundeliegende Modell Annahmen enthält, die sich erst im laufenden Betrieb als falsch herausstellen.

Aus US 2021/0309264 A1 ist ferner ein "human-robot collaboration system" bekannt, bei dem mittels Bewegungsplanungsalgorithmen die Bewegung des Roboters geplant wird. Hierbei wird eine Absicht des mit dem Roboter arbeitenden Menschen mit Hilfe von Wahrnehmungssystemen, generativen Modellen auf der Grundlage von Aufgabenwissen und probabilistischer Näherungsinferenz vorhergesagt. Der Roboter ist dadurch in der Lage, sich entsprechend den Vorhersagen über das Verhalten des interagierenden Menschen zu bewegen. Ein solches Verfahren zur Kollisionsvermeidung ist jedoch sehr rechenintensiv. Zudem ist eine umfassende Anpassung des Bewegungsablaufs an vorhergesagtes Verhalten eines Menschen zwar sehr flexibel. Umgekehrt ist es dann aber für den Menschen schwierig oder unmöglich, die Bewegung des Roboters zuverlässig vorherzusagen, was zu einer Verunsicherung eines mit dem Roboter zusammenarbeitenden Menschen führen kann und die Akzeptanz eines solchen Systems beeinträchtigt.

Es ist eine Aufgabe der Erfindung, ein Verfahren bereitzustellen, durch das mit vergleichsweise geringem Rechenaufwand ein vorgeplanter Bewegungsablauf für die Ansteuerung eines im Rahmen einer Mensch-Roboter-Kollaboration betriebenen Roboters dahingehend verbessert werden kann, möglichst optimal im Hinblick auf eine hohe Produktivität, auf eine hohe Sicherheit sowie auf einen geringen Verschleiß des Roboters zu sein und dabei eine hohe Bedienerfreundlichkeit und damit auch hohe Akzeptanz zu bieten.

Die Aufgabe wird durch ein Verfahren mit den Merkmalen des Anspruchs 1 gelöst. Vorteilhafte Weiterbildungen der Erfindung ergeben sich aus den Unteransprüchen, der vorliegenden Beschreibung sowie den Figuren.

Die Erfindung geht dabei davon aus, dass sich durch Betrachtung mehrerer tatsächlicher Durchläufe eines für das Ausführen einer Aufgabe vorgeplanten Bewegungsablaufs basierend auf Daten einer Sensorik, die an dem Roboter in der Regel ohnehin vorgesehen ist oder aber zusätzlich vorgesehen werden kann, leicht feststellen lässt, wo innerhalb eines Durchlaufs viele Störungen auftreten und Reaktionen stattfinden müssen und wo nicht, und dass auf Grundlage dieser Information der Bewegungsablauf so verbessert werden kann, dass dort, wo viele Störungen auftreten, insbesondere z. B. durch eine Verringerung der vorgegebenen Geschwindigkeit heftige Reaktion möglichst vermieden werden können, wohingegen dort, wo keine Störungen auftreten, insbesondere z. B. durch eine Erhöhung der vorgegebenen Geschwindigkeit die Produktivität möglichst gesteigert werden kann.

Das erfindungsgemäße Verfahren dient der Verbesserung eines vorgeplanten Bewegungsablaufs für die Ansteuerung eines im Rahmen einer Mensch-Roboter-Kollaboration betriebenen Roboters. Beispielsweise kann ein Speicher vorgesehen sein, in dem der vorgeplante Bewegungsablauf hinterlegt ist und aus dem er von einer Steuerungsvorrichtung zur Ansteuerung des Roboters ausgelesen werden kann. Der vorgeplante Bewegungsablauf kann dabei auf eine grundsätzlich beliebige Weise, beispielsweise nach einer für sich grundsätzlich bekannten Methode der Bahnplanung, vorab geplant worden sein. Der vorgeplante Bewegungsablauf umfasst eine definierte Bewegungsbahn, entlang welcher sich der Roboter bewegen soll, um eine bestimmte Aufgabe zu verrichten, sowie einen definierten Geschwindigkeitsverlauf, gemäß welchem jedem Punkt der Bewegungsbahn eine Geschwindigkeit zugeordnet ist, mit der sich der Roboter an dem jeweiligen Punkt bewegen soll. Vorzugsweise ist der vorgeplante Bewegungsablauf durch die Bewegungsbahn und den Geschwindigkeitsverlauf vollständig definiert.

Die Bewegungsbahn kann durch eine kontinuierliche Abfolge von Punkten gebildet werden. Jeder dieser Punkte kann durch mehrere Koordinaten definiert sein. Dabei kann es sich um übliche dreidimensionale Raumkoordinaten handeln, die z. B. in einem kartesischen Koordinatensystem definiert sein können. Insofern kann die Bewegungsbahn einer Strecke im Raum entsprechen, die von einem bestimmten an dem Roboter definierten Referenzpunkt durchlaufen werden soll. Bei dem Referenzpunkt kann es sich beispielsweise um den sogenannten Tool Center Point (TCP) des Roboters, einen zentralen Punkt eines an dem Roboter vorgesehenen Werkzeugs (z. B. die Werkzeugspitze), handeln. Wenn der Bewegungsablauf wie vorgeplant durchlaufen wird, bewegt sich also der Referenzpunkt des Roboters entlang der Bewegungsbahn und weist dabei an einem jeweiligen Punkt der Bewegungsbahn dessen Raumkoordinaten auf.

Die Punkte der Bewegungsbahn müssen aber nicht unbedingt durch dreidimensionale Raumkoordinaten definiert sein. Beispielsweise ist es alternativ dazu denkbar, dass die Punkte der Bewegungsbahn durch Koordinaten definiert sind, von denen jede einem Freiheitsgrad des Roboters (z. B. einem von einem Gelenk des Roboters eingenommenen Winkel) entspricht. Die Koordinaten eines jeweiligen Punktes der Bewegungsbahn geben dann also an, welchen Zustand bzw. welche Stellung der Roboter an diesem Punkt der Bewegungsbahn einnehmen soll.

Dass jedem Punkt der Bewegungsbahn eine Geschwindigkeit zugeordnet ist, impliziert nicht unbedingt eine stetige Zuordnung im Sinne einer mathematischen Funktion. Vielmehr können die Bewegungsbahn und ebenso der Geschwindigkeitsverlauf mit einer bestimmten zeitlichen und/oder räumlichen Auflösung definiert sein, so dass sie nur für eine bestimmte endliche Menge an Punkten konkret definiert sind. Die Auflösung wird dabei vorteilhafterweise derart gewählt, dass die Bereiche zwischen diesen Punkten für die Ansteuerung des Roboters zum Durchlaufen des Bewegungsablaufs keine Rolle spielen. Andernfalls kann, sofern erforderlich, vorgesehen sein, dass die Koordinaten weiterer Punkte der Bewegungsbahn sowie die diesen weiteren Punkten gemäß dem Geschwindigkeitsverlauf zugeordneten Geschwindigkeiten jeweils durch Interpolation ermittelt werden.

Das Verfahren umfasst, dass der Roboter, beispielsweise von der genannten Steuerungsvorrichtung, dazu angesteuert wird, den vorgeplanten Bewegungsablauf wiederholt zu durchlaufen, und dass während des wiederholten Durchlaufens des vorgeplanten Bewegungsablaufs, beispielsweise von einer Überwachungsvorrichtung, die in die Steuerungsvorrichtung integriert sein kann, eine Umgebung des Roboters, etwa mittels einer oder mehrerer Sensoreinrichtungen, überwacht wird und dabei Störungen erfasst werden, die von Objekten ausgehen, die sich in der Umgebung befinden oder in die Umgebung eindringen, so dass sich daraus (d. h. aus dem Befinden in der Umgebung bzw. dem Eindringen in die Umgebung) eine Gefährdung des jeweiligen Objekts durch den Roboter, insbesondere ein Risiko einer Kollision des jeweiligen Objekts mit dem Roboter, ergibt. Als Objekt ist in diesem Zusammenhang auch ein Mensch anzusehen, z. B. ein mit dem Roboter im Rahmen der Mensch-Roboter-Kollaboration zusammenarbeitender Mensch.

Mit anderen Worten wird der Roboter regulär betrieben, also im Rahmen einer Mensch-Roboter-Kollaboration dazu eingesetzt, die zu verrichtende Aufgabe in Zusammenarbeit mit einem oder mehreren Menschen planmäßig zu verrichten. Der Roboter wird zu diesem Zweck dazu angesteuert, sich entlang der Bewegungsbahn des vorgeplanten Bewegungsablaufs gemäß dem Geschwindigkeitsverlauf des vorgeplanten Bewegungsablaufs zu bewegen, jedenfalls solange es keinen Anlass dazu gibt, von dem Bewegungsablauf abzuweichen. Ein solcher Anlass kann sich aus dem Vorliegen einer Störung ergeben, die aufgrund der Überwachung der Umgebung des Roboters erfasst wird, wobei die Umgebung beispielsweise den gesamten Raum umfassen kann, der dem Roboter zugänglich ist. Die Überwachung der Umgebung des Roboters und das Erfassen von Störungen innerhalb dieser Umgebung können dabei auf an sich grundsätzlich bekannte Weise erfolgen. Insbesondere kann eine geeignete Sensorik vorgesehen sein, die sich am Roboter oder in der Umgebung des Roboters befinden kann. Beispielsweise kann der Roboter eine kapazitive Roboterhaut und/oder einen oder mehrere Time-of-Flight-Sensoren aufweisen, um Abstände von Objekten zum Roboter zu erfassen. Alternativ oder zusätzlich dazu kann ein Kamerasystem mit Ortsauflösung vorgesehen sein, durch das die Umgebung des Roboters bildlich erfasst werden kann.

Das Erfassen von Störungen kann sich dabei darauf beschränken, dass festgestellt wird, ob sich ein Objekt, etwa ein mit dem Roboter zusammenarbeitender Mensch, in der Umgebung des Roboters befindet oder nicht. Es kann aber auch, insbesondere je nach dem für ein jeweiliges Schutzkonzept erforderlichen Detailgrad, erfasst werden, um was für ein Objekt es sich handelt, von dem die Störung ausgeht, (Form, Maße, Material, Position, Bewegung) und/oder was für eine Gefährdung sich aus der Störung ergibt (Wahrscheinlichkeit einer Kollision, Grad einer möglichen Verletzung). Zudem kann vorgesehen sein, dass gemäß einem bestimmten an sich grundsätzlich bekannten Schutzkonzept auf eine erfasste Störung und die daraus resultierende Gefährdung reagiert wird (etwa durch Ausweichen oder Stehenbleiben), um das jeweilige Objekt zu schützen, insbesondere wenn es sich dabei um einen Menschen handelt.

Erfindungsgemäß umfasst das Verfahren ferner, dass beim wiederholten Durchlaufen des vorgeplanten Bewegungsablaufs für mehrere verschiedene Abschnitte der Bewegungsbahn die Häufigkeit von in dem jeweiligen Abschnitt erfassten Störungen ermittelt wird; dass nach dem wiederholten Durchlaufen des vorgeplanten Bewegungsablaufs ein modifizierter Geschwindigkeitsverlauf ermittelt wird, indem für die verschiedenen Abschnitte die den Punkten des jeweiligen Abschnitts zugeordneten Geschwindigkeiten in Abhängigkeit von der für den jeweiligen Abschnitt ermittelten Häufigkeit modifiziert werden; und dass für das weitere Ansteuern des Roboters ein verbesserter Bewegungsablauf bereitgestellt wird, der den modifizierten Geschwindigkeitsverlauf umfasst. Anschließend kann der verbesserte Bewegungsablauf in den Speicher geschrieben werden, in dem zuvor auch der vorgeplante Bewegungsablauf gespeichert worden ist (der dabei gegebenenfalls überschrieben wird) und aus dem der verbesserte Bewegungsablauf dann für das Ansteuern des Roboters abgerufen werden kann. Die genannten Schritte können beispielsweise von der Überwachungsvorrichtung oder von der Steuerungsvorrichtung durchgeführt werden. Grundsätzlich kann auch eine Optimierungsvorrichtung vorgesehen sein, welche aus dem Speicher zumindest den Geschwindigkeitsverlauf des vorgeplanten Bewegungsablaufs und von der Überwachungsvorrichtung Informationen über erfasste Störungen erhält und den modifizierten Geschwindigkeitsverlauf ermittelt, mit dem letztlich der verbesserte Bewegungsablauf bereitstellt werden kann, beispielsweise indem er in den Speicher geschrieben und/oder an die Steuerungsvorrichtung ausgegeben wird.

Gemäß dem beschriebenen Verfahren wird der Roboter also in Betrieb genommen und mehrere Male gemäß dem vorgeplanten Bewegungsablauf zur Verrichtung der jeweiligen Aufgabe im Rahmen einer Mensch-Roboter-Kollaboration eingesetzt, um daraus Erkenntnisse zu gewinnen, die dann für die Verbesserung des Bewegungsablaufs genutzt werden können. Konkret wird dabei die Häufigkeit von Störungen als Grundlage für die Verbesserung des Bewegungsablaufs herangezogen. Wichtig ist, dass diese Häufigkeit in Bezug auf den Ort der Störung entlang der Bewegungsbahn ermittelt wird, dass also erfasst wird, wo entlang der Bewegungsbahn des vorgeplanten Bewegungsablaufs besonders viele bzw. besonders wenige Störungen auftreten. Dazu wird für mehrere verschiedene Abschnitte der Bewegungsbahn gesondert ermittelt, wie häufig beim wiederholten Durchlaufen des vorgeplanten Bewegungsablaufs eine Störung erfasst wurde, während sich der Roboter an einem Punkt der Bewegungsbahn befunden hat, der in dem jeweiligen Abschnitt liegt. Auf diese Weise lässt sich ein Histogramm der Störungen entlang der Bewegungsbahn ermitteln.

Auf Grundlage der ermittelten Häufigkeiten wird dann der Geschwindigkeitsverlauf modifiziert. Auch der auf diese Weise ermittelte modifizierte Geschwindigkeitsverlauf ordnet dabei jedem Punkt der Bewegungsbahn eine Geschwindigkeit zu, mit der sich der Roboter an dem jeweiligen Punkt bewegen soll. Der modifizierte Geschwindigkeitsverlauf unterscheidet sich aber von dem Geschwindigkeitsverlauf des vorgeplanten Bewegungsablaufs dadurch, dass den Punkten der Bewegungsbahn eine modifizierte Geschwindigkeit zugeordnet wird, die sich von der ursprünglich zugeordneten Geschwindigkeit unterscheiden kann. Wesentlich für die Erfindung ist dabei, dass das Modifizieren der den jeweiligen Punkten zugeordneten Geschwindigkeiten in Abhängigkeit von der Häufigkeit erfolgt, mit der in dem Abschnitt der Bewegungsbahn, in dem der jeweilige Punkt liegt, Störungen erfasst worden sind. Die Verbesserung des Bewegungsablaufs ist insofern empirisch fundiert und dadurch besonders praxisorientiert.

Der ermittelte modifizierte Geschwindigkeitsverlauf geht schließlich in einen verbesserten Bewegungsablauf ein, den das erfindungsgemäße Verfahren dann als Ergebnis liefert. Anschließend kann der Roboter gemäß diesem verbesserten Bewegungsablauf anstelle des vorgeplanten Bewegungsablaufs angesteuert werden.

Durch das beschriebene Vorgehen werden im Betrieb des Roboters Störungen lokalisiert und registriert. Dadurch ergibt sich eine Zusatzinformation darüber, in welchen Abschnitten der Bewegungsbahn häufig bzw. selten eine Störung stattfindet. Diese Zusatzinformation kann dann genutzt werden, um die Produktivität des Roboters zu steigern, insbesondere indem die Geschwindigkeit des Roboters anhand der erfassten Häufigkeiten von Störungen in Abschnitten mit wenigen Störungen erhöht wird und/oder in Abschnitten mit vielen Störungen verringert wird. Durch eine verringerte Geschwindigkeit in Abschnitten mit vielen Störungen führen Störungen vorteilhafterweise seltener zu heftigen Reaktionen (starkes Abbremsen, plötzliches Ausweichen) des Roboters, so dass die Robotergelenke geschont werden und psychischer Stress bei den mit dem Roboter zusammenarbeitenden Menschen vermieden wird.

Das erfindungsgemäße Verfahren schließt selbstverständlich nicht aus, dass auch Ergebnisse aus gegebenenfalls durchgeführten Probe-, Test- oder Kalibrierungsdurchläufen außerhalb des regulären Betriebs in die Optimierung des Bewegungsabläufen einfließen können.

Besonders vorteilhaft ist es, wenn der verbesserte Bewegungsablauf dieselbe Bewegungsbahn wie der vorgeplante Bewegungsablauf umfasst. Bei einer solchen Ausführungsform wird also nur der Geschwindigkeitsverlauf verändert, während die Bewegungsbahn des verbesserten Bewegungsablaufs unverändert bleibt und somit identisch zu der Bewegungsbahn des vorgeplanten Bewegungsablaufs ist. Das hat den Vorteil, dass ein mit dem Roboter zusammenarbeitender Mensch sich nach einer Verbesserung des Bewegungsablaufs nicht auf eine neue Bewegungsbahn einstellen muss. Da durch das erfindungsgemäße Verfahren zudem heftige ad-hoc-Reaktionen des Roboters auf erfasste Störungen vermieden werden, führt das Verfahren insgesamt dazu, dass der Roboter verlässlicher der Erwartung einer Bewegung entlang der definierten Bewegungsbahn entspricht. Eine solche Ausführungsform steigert in besonderem Maße die Benutzerfreundlichkeit, da sie eine verlässliche Bewegungsbahn bietet und dort, wo das Risiko für eine Gefährdung tatsächlich vergleichsweise hoch ist, langsame Geschwindigkeiten vorsieht.

Die genannten verschiedenen Abschnitte der Bewegungsbahn können ganz unterschiedlich definiert sein und müssen dabei nicht unbedingt die gesamte Bewegungsbahn abdecken. Grundsätzlich kann es auch Bereiche der Bewegungsbahn geben, die für die Verbesserung des Bewegungsablaufs unberücksichtigt bleiben, in denen also keine auf Häufigkeiten erfasste Störungen ermittelt werden bzw. in denen die den Punkten der Bewegungsbahn zugeordneten Geschwindigkeiten nicht modifiziert werden. Vorzugsweise sind die mehreren verschiedenen Abschnitte der Bewegungsbahn disjunkt. Die Abschnitte können dabei auch als Wegpunkte mit einem jeweiligen dazugehörigen Korridor definiert sein.

Gemäß einer vorteilhaften Ausführungsform grenzen die mehreren verschiedenen Abschnitte lückenlos aneinander an und bilden gemeinsam zumindest einen Teil der Bewegungsbahn, wobei sie gemeinsam insbesondere die gesamte Bewegungsbahn bilden können. Insofern kann die Bewegungsbahn in die mehreren verschiedenen Abschnitte aufgeteilt sein. Die Anzahl und/oder die Länge der Abschnitte ist dabei vorzugsweise einstellbar, wobei nicht alle Abschnitte dieselbe Länge aufweisen müssen. Durch Abschnitte unterschiedlicher Länge kann das Verfahren an die Komplexität der jeweiligen Bewegungsbahn angepasst werden.

Gemäß einer weiteren vorteilhaften Ausführungsform umfasst das genannte Ermitteln des modifizierten Geschwindigkeitsverlaufs, dass Punkten von Abschnitten, für die eine vergleichsweise große Häufigkeit ermittelt wurde, eine im Vergleich zu dem Geschwindigkeitsverlauf des vorgeplanten Bewegungsablaufs verringerte Geschwindigkeit zugeordnet wird, und/oder Punkten von Abschnitten, für die eine vergleichsweise geringe Häufigkeit ermittelt wurde, eine im Vergleich zu dem Geschwindigkeitsverlauf des vorgeplanten Bewegungsablaufs vergrößerte Geschwindigkeit zugeordnet wird. Eine vergleichsweise große Häufigkeit kann insbesondere dann vorliegen, wenn die Häufigkeit größer als ein erster Schwellenwert ist. Eine vergleichsweise geringe Häufigkeit kann insbesondere dann vorliegen, wenn die Häufigkeit kleiner als ein zweiter Schwellenwert ist. Der erste Schwellenwert und der zweite Schwellenwert können, sofern beide vorgesehen sind, identisch sein. Dies ist jedoch nicht zwingend der Fall. Das Verringern der Geschwindigkeit in Abschnitten mit häufig auftretenden Störungen trägt dazu bei, die Sicherheit des Roboters für einen mit dem Roboter zusammenarbeitenden Menschen sowie für sonstige Objekte in der Umgebung des Roboters zu erhöhen und zugleich einen übermäßigen Verschleiß des Roboters infolge abrupter Abweichungen vom Bewegungsablauf zu vermeiden. Durch das Vergrößern der Geschwindigkeit in Abschnitten mit selten auftretenden Störungen wird die Produktivität und somit Wirtschaftlichkeit des Roboters erhöht.

Gemäß einer weiteren vorteilhaften Ausführungsform umfasst das genannte Ermitteln des modifizierten Geschwindigkeitsverlaufs, dass für jeden der Abschnitte jedem Punkt des jeweiligen Abschnitts eine modifizierte Geschwindigkeit zugeordnet wird, die basierend auf einer Ausgangsgeschwindigkeit in Abhängigkeit von der für den jeweiligen Abschnitt ermittelten Häufigkeit ermittelt wird. Bei dieser Ausgangsgeschwindigkeit kann es sich insbesondere um die Geschwindigkeit handeln, die dem jeweiligen Punkt gemäß dem Geschwindigkeitsverlauf des vorgeplanten Bewegungsablaufs zugeordnet ist.

Als Ausgangsgeschwindigkeit, von der ausgehend die modifizierte Geschwindigkeit für einen jeweiligen Punkt ermittelt wird, kann aber auch eine Geschwindigkeit herangezogen werden, die einem oder mehreren anderen Punkten des jeweiligen Abschnitts gemäß dem Geschwindigkeitsverlauf des vorgeplanten Bewegungsablaufs zugeordnet ist. Beispielsweise kann für die Ausgangsgeschwindigkeit die Geschwindigkeit herangezogen werden, die einem Punkt zugeordnet ist, der den Abschnitt begrenzt (Anfangs- bzw. Endpunkt des Abschnitts) oder eine Mitte des Abschnitts definiert (mittlere Punkt des Abschnitts). Mehreren Punkten kann die Ausgangsgeschwindigkeit beispielsweise insofern zugeordnet sein, als sie der mittleren Geschwindigkeit der diesen Punkten gemäß dem Geschwindigkeitsverlauf des vorgeplanten Bewegungsablaufs zugeordneten Geschwindigkeiten entspricht. Insofern kann für alle Punkte eines jeweiligen Abschnitts das Ermitteln der modifizierten Geschwindigkeit auf derselben Ausgangsgeschwindigkeit beruhen. Da zudem für alle Punkte eines jeweiligen Abschnitts die Häufigkeit erfasster Störungen dieselbe ist, kann vorgesehen sein, dass im Ergebnis allen Punkten eines jeweiligen Abschnitts dieselbe modifizierte Geschwindigkeit zugeordnet wird.

Das ist aber nicht zwingend der Fall. Beispielweise kann auch vorgesehen sein, dass in jedem Abschnitt jeweils nur für einen oder mehrere einzelne Punkt dieses Abschnitts die modifizierte Geschwindigkeit direkt aus der Ausgangsgeschwindigkeit und der Häufigkeit von Störungen in dem jeweiligen Abschnitt ermittelt wird und dass die modifizierte Geschwindigkeit für die übrigen Punkte der Bewegungsbahn durch Interpolation ermittelt wird. Denn auch in diesem Fall ist das Ermitteln der modifizierten Geschwindigkeit für einen jeweiligen Punkt (zumindest indirekt infolge der Interpolation) von der Häufigkeit von Störungen abhängig, die beim wiederholten Durchlaufen des vorgeplanten Bewegungsablaufs in dem Abschnitt, in dem der jeweilige Punkt liegt, erfasst worden sind.

Gemäß einer weiteren vorteilhaften Ausführungsform umfasst das genannte Ermitteln der modifizierten Geschwindigkeit, dass die genannte Geschwindigkeit, auf der das Ermitteln basiert, (d. h. die oben als Ausgangsgeschwindigkeit bezeichnete Geschwindigkeit) mit einem Faktor multipliziert wird, der eine monoton fallende, insbesondere z. B. streng monoton fallende, vorzugsweise lineare, Funktion der für den jeweiligen Abschnitt ermittelten Häufigkeit ist. Insbesondere kann die modifizierte Geschwindigkeit (gegebenenfalls abgesehen von einer Begrenzung und/oder einer Tiefpassfilterung, die nachstehend noch beschrieben werden) gerade dem Ergebnis dieser Multiplikation entsprechen.

Sofern die genannte Funktion eine Nullstelle aufweist, liegt diese vorzugsweise bei einer Häufigkeit, die in der Praxis nicht eintritt, um zu vermeiden, dass der Faktor negativ wird. Das kann beispielsweise dadurch erreicht werden, dass eine Funktion verwendet wird, deren Nullstelle bei einer Häufigkeit liegt, die größer als die Anzahl der Wiederholungen des genannten Durchlaufens des vorgeplanten Bewegungsablaufs ist. Durch den Verlauf, insbesondere die Steigung, der Funktion kann die Dynamik der Verbesserung vorgegeben werden. Insbesondere bei einer linearen Funktion kann der Ordinatenabschnitt beispielsweise zwischen 1 und 2 liegen, z. B. 1,2 betragen, so dass die Geschwindigkeit in Abschnitten, in denen keine Störungen erfasst worden sind, um 20 % vergrößert wird.

Es kann auch vorgesehen sein, dass die Funktion für Häufigkeiten, die kleiner als eine erste Grenzhäufigkeit sind, und Häufigkeiten, die größer als eine zweite Grenzhäufigkeit sind, jeweils konstant ist. In dem Bereich zwischen der ersten und der zweiten Grenzhäufigkeit kann die Funktion insbesondere linear sein. Beispielsweise kann die Funktion in den konstanten Bereichen einen Wert von 1,2 bzw. 0,1 aufweisen, so dass in Abschnitten mit Häufigkeiten, die kleiner als die erste Grenzhäufigkeit sind, die Geschwindigkeit um 20 % vergrößert wird, und in Abschnitten mit Häufigkeiten, die größer als die zweite Grenzhäufigkeit sind, die Geschwindigkeit um 90 % reduziert wird. In Abschnitten mit dazwischenliegenden Häufigkeiten ändern sich die Geschwindigkeiten entsprechend dem fallenden Verlauf der Funktion.

Gemäß einer weiteren vorteilhaften Ausführungsform ist die modifizierte Geschwindigkeit auf Werte begrenzt, die kleiner als eine Grenzgeschwindigkeit sind. Eine solche Begrenzung kann insbesondere dadurch vorgesehen werden, dass für das Ermitteln der modifizierten Geschwindigkeit gemäß einer vorgegebenen Berechnungsweise ein zunächst vorläufiger Wert berechnet wird, der aber nur dann tatsächlich als die modifizierte Geschwindigkeit herangezogen wird, wenn er nicht größer als die Grenzgeschwindigkeit ist, und dass andernfalls die Grenzgeschwindigkeit anstelle des vorläufigen Wertes als die modifizierte Geschwindigkeit herangezogen wird. Die Berechnungsweise kann beispielsweise der beschriebenen Multiplikation einer Ausgangsgeschwindigkeit mit einem Faktor entsprechen, deren Ergebnis dann, wenn es größer als die Grenzgeschwindigkeit ist, durch die Grenzgeschwindigkeit ersetzt wird.

Die Grenzgeschwindigkeit kann fest vorgegeben oder auch einstellbar sein. Außerdem kann die Grenzgeschwindigkeit als absoluter Wert oder aber relativ zu der jeweiligen Ausgangsgeschwindigkeit (etwa als prozentuale Veränderung) definiert sein. Durch eine absolute Grenzgeschwindigkeit kann sichergestellt werden, dass die modifizierte Geschwindigkeit auch in Abschnitten mit wenigen Störungen nicht über einen bestimmten Wert anwachsen kann. Durch eine relative Grenzgeschwindigkeit kann sichergestellt werden, dass Geschwindigkeit nicht zu schnell zunimmt. Grundsätzlich ist es denkbar, die modifizierte Geschwindigkeit sowohl durch eine absolute Grenzgeschwindigkeit als auch durch eine relative Grenzgeschwindigkeit, nämlich auf den jeweils kleineren Wert, zu begrenzen.

Die Grenzgeschwindigkeit braucht dabei nicht für alle Abschnitte dieselbe zu sein. Insbesondere kann die Grenzgeschwindigkeit für die verschiedenen Abschnitte individuell einstellbar sein. Beispielsweise kann für einen Abschnitt der Bewegungsbahn, in dem sich der Roboter in einem Raum bewegt, von dem (mit hinreichender Sicherheit) zu erwarten ist, dass er stets frei von Hindernissen ist, eine höhere Grenzgeschwindigkeit eingestellt werden, als für einen Abschnitt, in dem sich der Roboter erwartbar in der Nähe von Objekten bewegt.

Es kann auch vorgesehen sein, dass für jeden Punkt die Grenzgeschwindigkeit der dem jeweiligen Punkt gemäß dem Geschwindigkeitsverlauf des vorgeplanten Bewegungsablaufs zugeordneten Geschwindigkeit entspricht, so dass die dem jeweiligen Punkt zugeordnete Geschwindigkeit nicht zunehmen, sondern nur abnehmen kann. Ferner kann vorgesehen sein, dass für jeden der Abschnitte für jeden Punkt des jeweiligen Abschnitts die Grenzgeschwindigkeit der größten Geschwindigkeit des Geschwindigkeitsverlaufs des vorgeplanten Bewegungsablaufs innerhalb des jeweiligen Abschnitts entspricht, so dass die den Punkten des jeweiligen Abschnitts zugeordneten Geschwindigkeiten nicht über die maximale Geschwindigkeit des Abschnitts ansteigen können und somit zumindest im Wesentlichen nur abnehmen können. Außerdem kann vorgesehen sein, dass für jeden Punkt die Grenzgeschwindigkeit der insgesamt größten Geschwindigkeit des Geschwindigkeitsverlaufs des vorgeplanten Bewegungsablaufs entspricht, so dass die modifizierte Geschwindigkeit für insgesamt jeden Punkt nicht größer als die größte ursprüngliche Geschwindigkeit werden kann.

Gemäß einer weiteren vorteilhaften Ausführungsform wird auf die ermittelten modifizierten Geschwindigkeiten ein Tiefpassfilter angewandt. In den modifizierten Geschwindigkeitsverlauf gehen dann die tiefpassgefilterten modifizierten Geschwindigkeiten ein. Das Tiefpassfilter kann dabei fest vorgegeben oder einstellbar sein. Durch das Tiefpassfiltern wird ausgeglichen, dass beim Ermitteln des modifizierten Geschwindigkeitsverlaufs für alle Punkte eines jeweiligen Abschnitts in Abhängigkeit von derselben für den jeweiligen Abschnitt ermittelten Häufigkeit modifizierte Geschwindigkeiten ermittelt werden, sich die Häufigkeiten aber für Punkte verschiedener Abschnitte stark unterscheiden können, so dass es zu Sprüngen oder Knicken im Verlauf der ermittelten modifizierten Geschwindigkeiten kommen kann, die sich belastend für die Robotergelenke auswirken können und auf einen mit dem Roboter zusammenarbeitenden Menschen hektisch und somit verunsichernd wirken können. Das Anwenden eines Tiefpassfilters führt vorteilhafter Weise dazu, dass der modifizierte Geschwindigkeitsverlauf geglättet wird, so dass diese Nachteile vermieden werden.

Gemäß einer weiteren vorteilhaften Ausführungsform ist die Anzahl der Wiederholungen des genannten Durchlaufens des vorgeplanten Bewegungsablaufs (während dessen - wie beschrieben - Störungen in der Umgebung des Roboters erfasst werden, bevor für verschiedene Abschnitte der Bewegungsbahn der Geschwindigkeitsverlauf in Abhängigkeit von der Häufigkeit erfasster Störungen in dem jeweiligen Abschnitt modifiziert wird) einstellbar. Zweckmäßigerweise wird die Anzahl so gewählt, dass die ermittelten Häufigkeiten von in den verschiedenen Abschnitten der Bewegungsbahn erfassten Störungen hinreichend repräsentativ dafür sind, wo entlang der Bewegungsbahn Störungen häufig bzw. selten auftreten. Dies kann insbesondere dann der Fall sein, wenn sich bei einem weiteren Durchlaufen des vorgeplanten Bewegungsablaufs das Verhältnis der ermittelten Häufigkeiten zueinander nur noch unwesentlich verändert.

Gemäß einer weiteren vorteilhaften Ausführungsform wird der Bewegungsablauf iterativ verbessert, indem das Verfahren mehrmals durchgeführt und dabei der in einer jeweiligen Iteration letztlich bereitgestellte verbesserte Bewegungsablauf in der jeweiligen nächsten Iteration als der vorgeplante Bewegungsablauf verwendet wird. Bei der zweiten Iteration des Verfahrens ist also vorgesehen, dass der Roboter dazu angesteuert wird, den als Ergebnis der ersten Iteration bereitgestellten verbesserten Bewegungsablauf wiederholt zu durchlaufen, dass dabei Störungen in der Umgebung des Roboters erfasst werden und in Abhängigkeit von der Häufigkeit dieser Störungen der Geschwindigkeitsverlauf des verbesserten Bewegungsablauf für verschiedene Abschnitte der Bewegungsbahn modifiziert wird, um einen weiter verbesserten Bewegungsablauf zu erhalten, zu dessen wiederholtem Durchlaufen der Roboter dann bei einer dritten Iteration wiederum angesteuert wird usw., so dass der Bewegungsablauf immer weiter verbessert wird. Insbesondere bei einem solchen mehrmaligen Durchführen des Verfahrens ist es zweckmäßig, die Anzahl der Wiederholungen des Durchlaufens des jeweiligen vorgeplanten Bewegungsablaufs nicht zu gering einzustellen, damit sich der Bewegungsablauf nicht zu oft verändert und einem mit dem Roboter zusammenarbeitenden Menschen genügend Zeit bleibt, sich an die Veränderung zu gewöhnen.

Die Erfindung wird nachfolgend lediglich beispielhaft unter Bezugnahme auf die Figuren weiter erläutert.
- Fig. 1: zeigt in schematischer Darstellung einen Roboter sowie einen Menschen, die im Rahmen einer Mensch-Roboter-Kollaboration zusammenarbeiten.
- Fig. 2: zeigt einen beispielhaften Geschwindigkeitsverlauf eines vorgeplanten Bewegungsablaufs.
- Fig. 3: zeigt beispielhafte Häufigkeiten, mit denen bei einem wiederholten Durchlaufen des vorgeplanten Bewegungsablaufs Störungen in verschiedenen Abschnitten der Bewegungsbahn des vorgeplanten Bewegungsablaufs erfasst worden sind, als Häufigkeitsverteilung über die verschiedenen Abschnitte.
- Fig. 4: zeigt eine Funktion, die einer Häufigkeit erfasster Störungen einen Faktor für das Berechnen einer modifizierten Geschwindigkeit zuordnet.
- Fig. 5: zeigt einen vorläufigen modifizierten Geschwindigkeitsverlauf, der sich durch Anwendung des anhand der in Fig. 4 gezeigten Funktion in Abhängigkeit von den in Fig. 3 gezeigten Häufigkeiten ermittelten Faktors auf den in Fig. 2 gezeigten Geschwindigkeitsverlauf ergibt.
- Fig. 6: zeigt einen modifizierten Geschwindigkeitsverlauf, der sich durch Glättung des in Fig. 5 gezeigten vorläufigen modifizierten Geschwindigkeitsverlaufs mittels eines Tiefpassfilters ergibt.

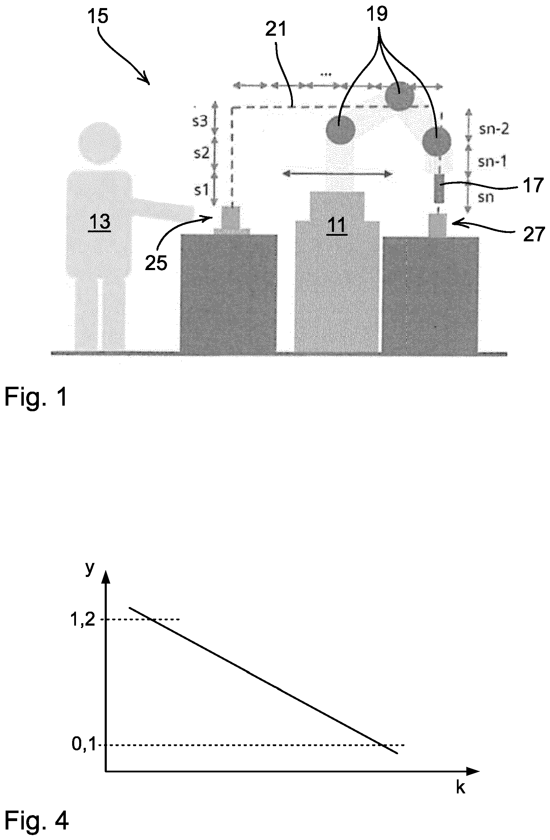

In Fig. 1 sind in stark vereinfachter schematischer Darstellung ein Roboter 11 sowie ein Mensch 13 gezeigt, die im Rahmen einer Mensch-Roboter-Kollaboration zusammenarbeiten. Dadurch befindet sich der Mensch 13 zumindest temporär in einer Umgebung 15 des Roboters 11, die dem Roboter 11 zugänglich ist, so dass grundsätzlich die Gefahr einer Kollision des Roboters 11 mit dem Menschen 13 besteht.

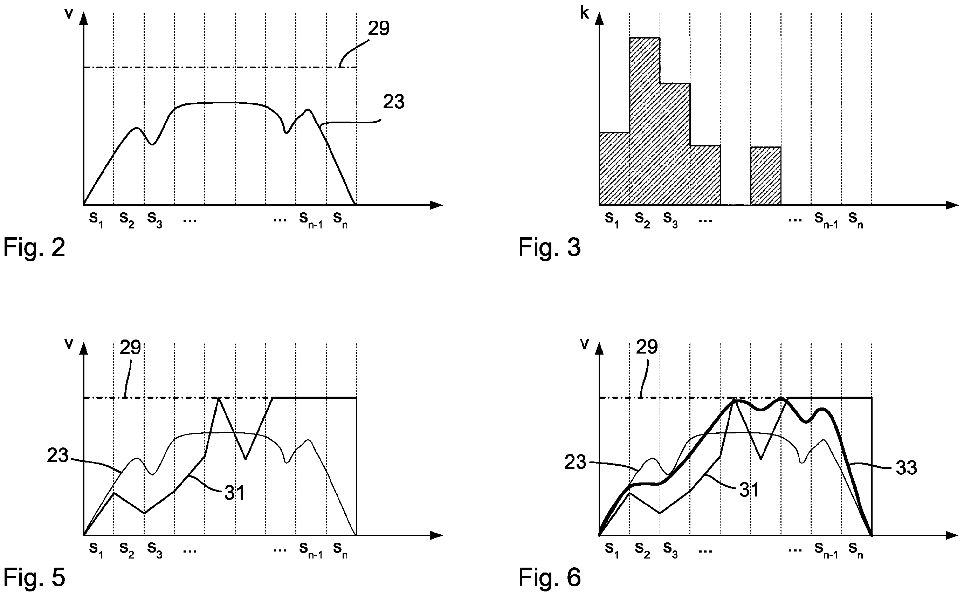

Der Roboter 11 ist als Roboterarm ausgebildet, an dessen freiem Ende ein Werkzeug 17 vorgesehen ist. Der Roboter 11 weist mehrere Gelenke 19 auf, die verstellt werden können, um das Werkzeug 17 an verschiedene Positionen innerhalb der Umgebung 15 zu bewegen. Insbesondere kann der Roboter 11 dazu angesteuert werden, einen vorgeplanten Bewegungsablauf zu durchlaufen, der eine definierte Bewegungsbahn 21 umfasst, entlang welcher sich der Roboter 11 bewegen soll, um eine bestimmte Aufgabe zu verrichten, sowie einen definierten Geschwindigkeitsverlauf 23 (vgl. Fig. 2) umfasst, gemäß welchem jedem Punkt der Bewegungsbahn 21 eine Geschwindigkeit v zugeordnet ist, mit der sich der Roboter 11 an dem jeweiligen Punkt bewegen soll.

Beispielsweise kann sich die Bewegungsbahn 21 des vorgeplanten Bewegungsablaufs entlang der in Fig. 1 gezeigten unterbrochenen Linie von einem ersten Arbeitsort 25 zu einem zweiten Arbeitsort 27 erstrecken. Jedem Punkt der Bewegungsbahn 21 ist dabei gemäß dem Geschwindigkeitsverlauf 23, der in Fig. 2 als Kurve der Geschwindigkeit v über die Position entlang der Bewegungsbahn 21 gezeigt ist, eine Geschwindigkeit v zugeordnet. Der Roboter 11 wird also dazu angesteuert, sich von dem ersten Arbeitsort 25 entlang der gezeigten Bewegungsbahn 21 zum zweiten Arbeitsort 27 (und entlang derselben Bewegungsbahn 21 auch wieder zurück) zu bewegen und zwar derart, dass er sich dabei an jedem Punkt der Bewegungsbahn 21 mit der dem jeweiligen Punkt gemäß dem Geschwindigkeitsverlauf 23 zugeordneten Geschwindigkeit v bewegt. Dieser vorgeplante Bewegungsablauf kann beispielsweise nach bekannten Methoden der Bahnplanung im Hinblick auf die zu verrichtende Aufgabe sowie auf die räumlichen Gegebenheiten vorab festgelegt worden sein.

Um den Menschen 13, der mit dem Roboter 11 zusammenarbeitet, beim Betrieb des Roboters 11 zu schützen, wird der vorgeplante Bewegungsablauf nicht unbedingt strikt eingehalten. Sondern es ist eine (nicht dargestellte) Sensorik vorgesehen, mittels welcher die Umgebung 15 des Roboters 11 überwacht wird, um erfassen zu können, ob eine Störung vorliegt, d. h. ob sich ein Objekt, insbesondere der Mensch 13, aktuell in der Umgebung 15 befindet oder in die Umgebung 15 eindringt und ob sich daraus eine Gefährdung des jeweiligen Objekts durch den Roboter 11, nämlich insbesondere das Risiko einer Kollision mit dem Roboter 11, ergibt. Wenn dies der Fall ist, wird eine Schutzmaßnahme ausgelöst, die darin bestehen kann, dass die Bewegung des Roboters 11 verlangsamt oder zumindest vorübergehend vollständig ausgesetzt wird und/oder dass der Roboter 11 dazu angesteuert wird, eine von der Bewegungsbahn 21 abweichende Bewegung auszuführen, um dem Objekt auszuweichen. Unabhängig davon, nach welcher Methode Störungen erfasst und bewertet werden und nach welcher Methode Schutzmaßnahmen in Reaktion hierauf gegebenenfalls ausgelöst werden, zielt das erfindungsgemäße Verfahren darauf ab, die Intensität einer Reaktion auf eine erfasste Störung möglichst gering zu halten, zugleich aber die Produktivität des Roboters 11 möglichst wenig zu beeinträchtigen oder sie sogar zu steigern.

Zu diesem Zweck ist erfindungsgemäß vorgesehen, dass der Roboter 11 dazu angesteuert wird, den vorgeplanten Bewegungsablauf wiederholt zu durchlaufen. Der Roboter 11 wird zunächst also eine gewisse vorgegebene oder vorgebbare Anzahl von Durchläufen lang regulär betrieben, um in Zusammenarbeit mit dem Menschen 13 die zu erledigende Aufgabe zu verrichten. Das ermöglicht es, auf empirische Weise Erkenntnisse darüber zu erlangen, in welchem Umfang es dabei zu Gefährdungen des Menschen 13 kommt bzw. Schutzmaßnahmen in Reaktion auf solche Gefährdungen ausgelöst werden müssen. Konkret ist dazu vorgesehen, dass während des wiederholten Durchlaufens des vorgeplanten Bewegungsablaufs die Umgebung 15 des Roboters 11 überwacht wird und dabei Störungen erfasst werden, die von Objekten, insbesondere dem Menschen 13, ausgehen, die sich in der Umgebung 15 befinden oder in die Umgebung 15 eindringen, so dass sich daraus eine Gefährdung des jeweilige Objekts durch den Roboter 11 ergibt. Diese Erkenntnisse können anschließend dazu genutzt werden, den vorgeplanten Bewegungsablauf zu verbessern.

Das erfolgt dadurch, dass für mehrere verschiedene Abschnitte s₁-sₙ der Bewegungsbahn 21 die Häufigkeit k von in dem jeweiligen Abschnitt erfassten Störungen ermittelt wird und anschließend in Abhängigkeit von diesen Häufigkeiten k die den Punkten des Bewegungsablaufs 21 zugeordneten Geschwindigkeiten v modifiziert werden, um einen modifizierten Geschwindigkeitsverlauf 31 bzw. 33 (vgl. Fig. 5 und 6) zu erhalten, der dann zusammen mit der unveränderten Bewegungsbahn 21 den verbesserten Bewegungsablauf bilden kann. Wie in Fig. 1 zu erkennen ist, wird die Bewegungsbahn 21 dazu vollständig in die mehreren verschiedenen Abschnitte s₁-sₙ aufgeteilt, die zueinander disjunkt sind und jeweils dieselbe Länge aufweisen. Grundsätzlich können die verschiedenen Abschnitte s₁-sₙ aber auch anders definiert sein.

Die Häufigkeiten k der in den verschiedenen Abschnitten s₁-sₙ beim wiederholten Durchlaufen des vorgeplanten Bewegungsablaufs erfassten Störungen können über die verschiedenen Abschnitte s₁-sₙ aufgetragen werden, so dass sich beispielsweise das in Fig. 3 gezeigte Histogramm ergibt. Auf Grundlage dieser Daten können die Geschwindigkeiten v, die jeweils einem der Punkte der Bewegungsbahn 21 zugeordnet sind, modifiziert werden. Dabei wird für jeden Punkt zunächst eine Ausgangsgeschwindigkeit bestimmt, bei der es sich um die dem jeweiligen Punkt gemäß dem Geschwindigkeitsverlauf 23 zugeordnete Geschwindigkeit v oder z. B. um eine mittlere, eine Anfangs- oder eine Endgeschwindigkeit des Abschnitts s₁-sₙ, in dem der jeweilige Punkt liegt, handeln kann. Diese Ausgangsgeschwindigkeit wird dann mit einem Faktor y multipliziert, in den die für den jeweiligen Abschnitt s₁-sₙ ermittelte Häufigkeit k eingeht.

In dem gezeigten Beispiel ist der Faktor y eine monoton fallende lineare Funktion der Häufigkeit k, die in Fig. 4 grafisch dargestellt ist. Da die Funktion fallend ist, werden durch die Funktion großen Häufigkeiten k kleine Faktoren y und geringen Häufigkeiten k große Faktoren y zugeordnet. Der Faktor y nimmt dabei vorteilhafterweise für geringe Häufigkeiten k einen Wert größer als 1, insbesondere in der Größenordnung von 1,2, an und für große Häufigkeiten k einen Wert zwischen 0 und 1, insbesondere in der Größenordnung von 0,1, an. Auf diese Weise wird in Abschnitten s₁-sₙ, für die eine vergleichsweise große Häufigkeit k von Störungen ermittelt wurde, die Geschwindigkeit v im Wesentlichen verringert (so dass dort auf erfasste Störungen vergleichsweise moderat reagiert werden kann), während in Abschnitten s₁-sₙ, für die eine vergleichsweise geringe Häufigkeit k von Störungen ermittelt wurde, die Geschwindigkeit v im Wesentlichen vergrößert wird (so dass sich der Roboter 11 dort aufgrund der Seltenheit der Störungen schnell und somit effizient bewegen kann).

Die anhand der in Fig. 4 gezeigten Funktion ermittelten Faktoren y können dann abschnittsweise auf die Geschwindigkeiten v des Geschwindigkeitsverlaufs 23 angewandt werden. Grundsätzlich könnte für jeden Punkt der Bewegungsbahn 21 die ihm zugeordnete Geschwindigkeit v mit dem jeweiligen Faktor y multipliziert werden, um für den jeweiligen Punkt eine modifizierte Geschwindigkeit v zu erhalten. Zur Vereinfachung kann dies aber auch nur für einzelne oder wenige Stützpunkte eines jeweiligen der Abschnitte s₁-sₙ gemacht werden. Für die übrigen Punkte können die modifizierten Geschwindigkeiten v dann durch Interpolation zwischen den Stützpunkten ermittelt werden.

In Abschnitten s₁-sₙ, in denen keinerlei Störungen erfasst wurden, so dass die Häufigkeit k null beträgt, kann das Anwenden des Faktors y zu sehr großen modifizierten Geschwindigkeiten v führen. Daher kann es zweckmäßig sein, die modifizierten Geschwindigkeiten v auf Werte zu begrenzen, die kleiner als eine Grenzgeschwindigkeit 29 sind, die in den Fig. 2, 5 und 6 als strichpunktierte horizontale Linie gekennzeichnet ist. Bei der Grenzgeschwindigkeit 29 kann es sich beispielsweise um eine für den Roboter 11 maximal zulässige Geschwindigkeit handeln. Sollte die Berechnung der modifizierten Geschwindigkeit v für einen jeweiligen Punkt zu einem Wert führen, der größer als die Grenzgeschwindigkeit 29 ist, wird als die modifizierte Geschwindigkeit v anstelle dieses Werts die Grenzgeschwindigkeit 29 verwendet.

Ein beispielhafter und (in dem gezeigten Beispiel) vorläufiger modifizierter Geschwindigkeitsverlauf 31, gemäß dem jeden Punkt der Bewegungsbahn 21 eine auf diese Weise ermittelte modifizierte Geschwindigkeit v zugeordnet ist, ist in Fig. 5 in Überlagerung zu dem ursprünglichen Geschwindigkeitsverlauf 23 des vorgeplanten Bewegungsablaufs gezeigt. Wie zu erkennen ist, weist der vorläufige modifizierte Geschwindigkeitsverlauf 31 aufgrund der genannten Begrenzung keine Geschwindigkeiten v auf, die größer als die Grenzgeschwindigkeit 29 sind.

Dadurch, dass die verschiedenen Abschnitte s₁-sₙ für das Ermitteln der modifizierten Geschwindigkeiten v völlig unabhängig voneinander betrachtet werden, ergeben sich in dem resultierenden vorläufigen modifizierten Geschwindigkeitsverlauf 31 plötzliche starke Änderungen in der Geschwindigkeit v, die als Knicke im vorläufigen modifizierten Geschwindigkeitsverlauf 31 zu erkennen sind und sich belastend auf die Robotergelenke 19 auswirken. Außerdem können die Bewegungen des Roboters 11 dadurch auf den Menschen 13 als hektisch wahrgenommen werden und dadurch psychisch belastend wirken.

Um dies zu vermeiden, wird auf den vorläufigen modifizierten Geschwindigkeitsverlauf 31 ein Tiefpassfilter angewandt. Auf diese Weise ergibt sich der in Fig. 6 in Überlagerung zum Geschwindigkeitsverlauf 23 sowie zum vorläufigen modifizierten Geschwindigkeitsverlauf 31 gezeigte modifizierte Geschwindigkeitsverlauf 33, der infolge der Tiefpassfilterung im Vergleich zum vorläufigen modifizierten Geschwindigkeitsverlauf 31 geglättet ist und daher keine Knicke mehr aufweist. Dieser modifizierte Geschwindigkeitsverlauf 33 kann schließlich zusammen mit der (unveränderten) Bewegungsbahn 21 den verbesserten Bewegungsablauf bilden, der dann für die weitere Ansteuerung des Roboters 11 herangezogen wird. Dadurch bewegt sich der Roboter 11 dann in Abschnitten s₁-sₙ mit wenigen Störungen im Vergleich zum vorgeplanten Bewegungsablauf schneller und in Abschnitten s₁-sₙ mit vielen Störungen im Vergleich zum vorgeplanten Bewegungsablauf langsamer, so dass sich die Produktivität des Roboters 11 erhöht und zugleich die Sicherheit des Menschen 13 gewährleistet bleibt, ohne dass der Roboter 11 einem hohen Verschleiß unterliegt. Dass die Bewegungsbahn 21 dabei unverändert bleibt, trägt zudem zur Benutzerfreundlichkeit und Akzeptanz der Zusammenarbeit mit dem Roboter 11 bei. Die Art und Weise, in der der Bewegungsablauf verbessert wird, insbesondere der modifizierte Geschwindigkeitsverlauf 33 ermittelt wird, ist dabei vergleichsweise einfach und dadurch wenig rechenintensiv, so dass die Verbesserung keine hohen Anforderungen an die Rechenleistung stellt, geschweige denn separate Hardware erfordert.

Das beschriebene Verfahren kann iterativ durchgeführt werden, wobei der als Ergebnis einer Iteration des Verfahrens erhaltene verbesserte Bewegungsablauf bei der nächsten Iteration als der vorgeplante Bewegungsablauf herangezogen wird.

Auf diese Weise kann der Bewegungsablauf immer weiter - oder zumindest solange, bis weitere Iterationen zu keiner signifikanten Verbesserung mehr führen - verbessert werden.

### Bezugszeichen

- 11: Roboter
- 13: Objekt/Mensch
- 15: Umgebung
- 17: Werkzeug
- 19: Gelenk
- 21: Bewegungsbahn
- 23: Geschwindigkeitsverlauf
- 25: erster Arbeitsort
- 27: zweiter Arbeitsort
- 29: Grenzgeschwindigkeit
- 31: vorläufiger modifizierter Geschwindigkeitsverlauf
- 33: modifizierter Geschwindigkeitsverlauf

## Patentansprüche

1. Verfahren zur Verbesserung eines vorgeplanten Bewegungsablaufs für die Ansteuerung eines im Rahmen einer Mensch-Roboter-Kollaboration betriebenen Roboters (11),
wobei der vorgeplante Bewegungsablauf eine definierte Bewegungsbahn (21) umfasst, entlang welcher sich der Roboter (11) bewegen soll, um eine bestimmte Aufgabe zu verrichten, sowie einen definierten Geschwindigkeitsverlauf (23) umfasst, gemäß welchem jedem Punkt der Bewegungsbahn (21) eine Geschwindigkeit (v) zugeordnet ist, mit der sich der Roboter (11) an dem jeweiligen Punkt bewegen soll,
wobei das Verfahren umfasst:
- dass der Roboter (11) dazu angesteuert wird, den vorgeplanten Bewegungsablauf wiederholt zu durchlaufen; und
- dass während des wiederholten Durchlaufens des vorgeplanten Bewegungsablaufs eine Umgebung (15) des Roboters (11) überwacht wird und dabei Störungen erfasst werden, die von Objekten (13) ausgehen, die sich in der Umgebung (15) befinden oder in die Umgebung (15) eindringen, so dass sich daraus eine Gefährdung des jeweiligen Objekts (13) durch den Roboter (11) ergibt;
**dadurch gekennzeichnet,**
**dass** das Verfahren ferner umfasst:
- **dass** beim wiederholten Durchlaufen des vorgeplanten Bewegungsablaufs für mehrere verschiedene Abschnitte (s₁-sₙ) der Bewegungsbahn (21) die Häufigkeit (k) von in dem jeweiligen Abschnitt (s₁-sₙ) erfassten Störungen ermittelt wird;
- **dass** nach dem wiederholten Durchlaufen des vorgeplanten Bewegungsablaufs ein modifizierter Geschwindigkeitsverlauf (31 bzw. 33) ermittelt wird, indem für die verschiedenen Abschnitte (s₁-sₙ) die den Punkten des jeweiligen Abschnitts (s₁-sₙ) zugeordneten Geschwindigkeiten (v) in Abhängigkeit von der für den jeweiligen Abschnitt (s₁-sₙ) ermittelten Häufigkeit (k) modifiziert werden; und
- **dass** für das weitere Ansteuern des Roboters (11) ein verbesserter Bewegungsablauf bereitgestellt wird, der den modifizierten Geschwindigkeitsverlauf (31 bzw. 33) umfasst.

2. Verfahren nach Anspruch 1,
wobei der verbesserte Bewegungsablauf dieselbe Bewegungsbahn (21) wie der vorgeplante Bewegungsablauf umfasst.

3. Verfahren nach Anspruch 1 oder 2,
wobei die mehreren verschiedenen Abschnitte (s₁-sₙ) lückenlos aneinander angrenzen und gemeinsam zumindest einen Teil der Bewegungsbahn (21) bilden,
wobei die Anzahl und/oder die Länge der Abschnitte (s₁-sₙ) einstellbar ist.

4. Verfahren nach einem der vorstehenden Ansprüche,
wobei das Ermitteln des modifizierten Geschwindigkeitsverlaufs (31 bzw. 33) umfasst, dass Punkten von Abschnitten (s₁-sₙ), für die eine vergleichsweise große Häufigkeit (k) ermittelt wurde, eine im Vergleich zu dem Geschwindigkeitsverlauf (23) des vorgeplanten Bewegungsablaufs verringerte Geschwindigkeit (v) zugeordnet wird, und/oder Punkten von Abschnitten (s₁-sₙ), für die eine vergleichsweise geringe Häufigkeit (k) ermittelt wurde, eine im Vergleich zu dem Geschwindigkeitsverlauf (23) des vorgeplanten Bewegungsablaufs vergrößerte Geschwindigkeit (v) zugeordnet wird, wobei die vergleichsweise große Häufigkeit dann vorliegt, wenn die Häufigkeit größer als ein erster Schwellenwert ist, und die vergleichsweise geringe Häufigkeit dann vorliegt, wenn die Häufigkeit kleiner als ein zweiter Schwellenwert ist.

5. Verfahren nach einem der vorstehenden Ansprüche,
wobei das Ermitteln des modifizierten Geschwindigkeitsverlaufs (31 bzw. 33) umfasst, dass für jeden der Abschnitte (s₁-sₙ) jedem Punkt des jeweiligen Abschnitts (s₁-sₙ) eine modifizierte Geschwindigkeit (v) zugeordnet wird, die basierend auf der Geschwindigkeit (v), die dem jeweiligen Punkt oder einem oder mehreren anderen Punkten des jeweiligen Abschnitts (s₁-sₙ) gemäß dem Geschwindigkeitsverlauf (23) des vorgeplanten Bewegungsablaufs zugeordnet ist, in Abhängigkeit von der für den jeweiligen Abschnitt (s₁-sₙ) ermittelten Häufigkeit (k) ermittelt wird.

6. Verfahren nach Anspruch 5,
wobei das Ermitteln der modifizierten Geschwindigkeit (v) umfasst, dass die genannte Geschwindigkeit (v), auf der das Ermitteln basiert, mit einem Faktor (y) multipliziert wird, der eine monoton fallende, insbesondere lineare, Funktion der für den jeweiligen Abschnitt (s₁-sₙ) ermittelten Häufigkeit (k) ist.

7. Verfahren nach Anspruch 5 oder 6,
wobei die modifizierte Geschwindigkeit (v) auf Werte begrenzt ist, die kleiner als eine Grenzgeschwindigkeit (29) sind.

8. Verfahren nach Anspruch 7,
wobei die Grenzgeschwindigkeit (29) für die verschiedenen Abschnitte (s₁-sₙ) individuell einstellbar ist.

9. Verfahren nach Anspruch 7,
wobei für jeden Punkt die Grenzgeschwindigkeit (29) der dem jeweiligen Punkt gemäß dem Geschwindigkeitsverlauf (23) des vorgeplanten Bewegungsablaufs zugeordneten Geschwindigkeit (v) entspricht.

10. Verfahren nach Anspruch 7,
wobei für jeden der Abschnitte (s₁-sₙ) für jeden Punkt des jeweiligen Abschnitts (s₁-sₙ) die Grenzgeschwindigkeit (29) der größten Geschwindigkeit (v) des Geschwindigkeitsverlaufs (23) des vorgeplanten Bewegungsablaufs innerhalb des jeweiligen Abschnitts (s₁-sₙ) entspricht.

11. Verfahren nach Anspruch 7,
wobei für jeden Punkt die Grenzgeschwindigkeit (29) der insgesamt größten Geschwindigkeit (v) des Geschwindigkeitsverlaufs (23) des vorgeplanten Bewegungsablaufs entspricht.

12. Verfahren nach einem der Ansprüche 5 bis 11,
wobei auf die ermittelten modifizierten Geschwindigkeiten (v) ein Tiefpassfilter angewandt wird.

13. Verfahren nach einem der vorstehenden Ansprüche,
wobei die Anzahl der Wiederholungen des genannten Durchlaufens des vorgeplanten Bewegungsablaufs einstellbar ist.

14. Verfahren nach einem der vorstehenden Ansprüche,
wobei der Bewegungsablauf iterativ verbessert wird, indem das Verfahren mehrmals durchgeführt und dabei der in einer jeweiligen Iteration bereitgestellte verbesserte Bewegungsablauf in der jeweiligen nächsten Iteration als der vorgeplante Bewegungsablauf verwendet wird.

## Claims

1. A method of improving a preplanned movement sequence for the control of a robot (11) operated as part of a human-robot collaboration,
wherein the preplanned movement sequence comprises a defined movement path (21) along which the robot (11) is to move in order to perform a specific task, and a defined speed development (23) according to which each point of the movement path (21) is associated with a speed (v) at which the robot (11) is to move at the respective point,
wherein the method comprises:
- the robot (11) being controlled to repeatedly run through the preplanned movement sequence; and
- during the repeated run-through of the preplanned movement sequence, an environment (15) of the robot (11) being monitored and, in so doing, disturbances being detected that emanate from objects (13) which are located in the environment (15) or which enter into the environment (15) so that an endangerment of the respective object (13) by the robot (11) results therefrom,
**characterized in that**
the method further comprises:
- on the repeated run-through of the preplanned movement sequence, for a plurality of different sections (s₁-sₙ) of the movement path (21), the frequency (k) of disturbances detected in the respective section (s₁-sₙ) being determined;
- after the repeated run-through of the preplanned movement sequence, a modified speed development (31 or 33) being determined **in that**, for the different sections (s₁-sₙ), the speeds (v) associated with the points of the respective section (s₁-sₙ) are modified in dependence on the frequency (k) determined for the respective section (s₁-sₙ); and
- an improved movement sequence that comprises the modified speed development (31 or 33) being provided for the further control of the robot (11).

2. A method according to claim 1,
wherein the improved movement sequence comprises the same movement path (21) as the preplanned movement sequence.

3. A method according to claim 1 or 2,
wherein the plurality of different sections (s₁-sₙ) adjoin one another without gaps and together form at least a part of the movement path (21), wherein the number and/or the length of the sections (s₁-sₙ) is/are settable.

4. A method according to any one of the preceding claims,
wherein the determination of the modified speed development (31 or 33) comprises points of sections (s₁-sₙ) for which a comparatively large frequency (k) has been determined being associated with a speed (v) that is decreased in comparison with the speed development (23) of the preplanned movement sequence, and/or points of sections (s₁-sₙ) for which a comparatively small frequency (k) has been determined being associated with a speed (v) that is increased in comparison with the speed development (23) of the preplanned movement sequence,
wherein the comparatively large frequency is present when the frequency is greater than a first threshold value and the comparatively small frequency is present when the frequency is less than a second threshold value.

5. A method according to any one of the preceding claims,
wherein the determination of the modified speed development (31 or 33) comprises, for each of the sections (s₁-sₙ), associating each point of the respective section (s₁-sₙ) with a modified speed (v) which is determined based on the speed (v) that is associated with the respective point or with one or more other points of the respective section (s₁-sₙ) in accordance with the speed development (23) of the preplanned movement sequence, in dependence on the frequency (k) determined for the respective section (s₁-sₙ).

6. A method according to claim 5,
wherein the determination of the modified speed (v) comprises multiplying said speed (v) on which the determination is based by a factor (y) that is a monotonically decreasing function, in particular a linear function, of the frequency (k) determined for the respective section (s₁-sₙ).

7. A method according to claim 5 or 6,
wherein the modified speed (v) is limited to values that are less than a limit speed (29).

8. A method according to claim 7,
wherein the limit speed (29) is individually settable for the different sections (s₁-sₙ).

9. A method according to claim 7,
wherein, for each point, the limit speed (29) corresponds to the speed (v) associated with the respective point in accordance with the speed development (23) of the preplanned movement sequence.

10. A method according to claim 7,
wherein, for each of the sections (s₁-sₙ), for each point of the respective section (s₁-sₙ), the limit speed (29) corresponds to the greatest speed (v) of the speed development (23) of the preplanned movement sequence within the respective section (s₁-sₙ).

11. A method according to claim 7,
wherein, for each point, the limit speed (29) corresponds to the overall greatest speed (v) of the speed development (23) of the preplanned movement sequence.

12. A method according to any one of the claims 5 to 11,
wherein a low-pass filter is applied to the determined modified speeds (v).

13. A method according to any one of the preceding claims,
wherein the number of repetitions of said run-through of the preplanned movement sequence is settable.

14. A method according to any one of the preceding claims,
wherein the movement sequence is iteratively improved by performing the method multiple times and, in so doing, using the improved movement sequence provided in a respective iteration as the preplanned movement sequence in the respective next iteration.

## Revendications

1. Procédé d'amélioration d'une séquence de mouvements préplanifiée pour la commande d'un robot (11) exploité dans le cadre d'une collaboration homme-robot,
la séquence de mouvements préplanifiée incluant une trajectoire de mouvement définie (21), le long de laquelle le robot (11) doit se déplacer pour exécuter une tâche déterminée, ainsi qu'une courbe de vitesse définie (23) selon laquelle une vitesse (v) est attribuée à chaque point de la trajectoire de mouvement (21), vitesse à laquelle le robot (11) doit se déplacer au point respectif,
le procédé consistant à :
- commander le robot (11) de manière à parcourir de façon répétée la séquence de mouvements préplanifiée ; et
- surveiller, pendant le parcours répété de la séquence de mouvements préplanifiée, un environnement (15) du robot (11), et détecter alors des perturbations inhérentes aux objets (13) qui se trouvent dans l'environnement (15) ou qui pénètrent dans l'environnement (15), de sorte qu'il en résulte une mise en danger de l'objet respectif (13) par le robot (11) ;
**caractérisé en ce que**
le procédé consiste en outre à :
- déterminer, lors du parcours répété de la séquence de mouvements préplanifiée, pour plusieurs sections différentes (s₁-sₙ) de la trajectoire de mouvement (21), la fréquence (k) des perturbations détectées dans la section respective (s₁-sₙ) ;
- après le parcours répété de la séquence de mouvements préplanifiée, déterminer une courbe de vitesse modifiée (31 ou 33) en modifiant, pour les différentes sections (s₁-sₙ), les vitesses (v) attribuées aux points de la section respective (s₁-sₙ), en fonction de la fréquence (k) déterminée pour la section respective (s₁-sₙ) ; et
- pour la commande ultérieure du robot (11), assurer une séquence de mouvements améliorée qui inclut la courbe de vitesse modifiée (31 ou 33).

2. Procédé selon la revendication 1,
dans lequel la séquence de mouvements améliorée inclut la même trajectoire de mouvement (21) que la séquence de mouvements préplanifiée.

3. Procédé selon la revendication 1 ou 2,
dans lequel la pluralité de différentes sections (s₁-sₙ) sont adjacentes les unes aux autres sans intervalle et forment ensemble au moins une partie de la trajectoire de mouvement (21),
le nombre et/ou la longueur des sections (s₁-sₙ) étant réglable(s).

4. Procédé selon l'une des revendications précédentes,
dans lequel la détermination de la courbe de vitesse modifiée (31 ou 33) inclut l'attribution d'une vitesse (v), réduite par comparaison à la courbe de vitesse (23) de la séquence de mouvements préplanifiée, à des points de sections (s₁-sₙ) pour lesquelles une fréquence (k) comparativement élevée a été déterminée, et/ou l'attribution d'une vitesse (v), augmentée par comparaison à la courbe de vitesse (23) de la séquence de mouvements préplanifiée, à des points de sections (s₁-sₙ) pour lesquelles une fréquence (k) comparativement faible a été déterminée,
la fréquence comparativement élevée se présentant si la fréquence est supérieure à un premier seuil, et la fréquence comparativement faible se présentant si la fréquence est inférieure à un deuxième seuil.

5. Procédé selon l'une des revendications précédentes,
dans lequel la détermination de la courbe de vitesse modifiée (31 ou 33) inclut l'attribution, pour chacune des sections (s₁-sₙ), à chaque point de la section respective (s₁-sₙ), d'une vitesse modifiée (v) qui est déterminée en se basant sur la vitesse (v) attribuée au point respectif ou à un ou plusieurs autres points de la section respective (s₁-sₙ) selon la courbe de vitesse (23) de la séquence de mouvements préplanifiée, en fonction de la fréquence (k) déterminée pour la section respective (s₁-sₙ).

6. Procédé selon la revendication 5,
dans lequel la détermination de la vitesse modifiée (v) inclut la multiplication de ladite vitesse (v), sur laquelle la détermination est basée, par un facteur (y) qui est une fonction à décroissance monotone, en particulier linéaire, de la fréquence (k) déterminée pour la section respective (s₁-sₙ).

7. Procédé selon la revendication 5 ou 6,
dans lequel la vitesse modifiée (v) est limitée à des valeurs inférieures à une vitesse limite (29).

8. Procédé selon la revendication 7,
dans lequel la vitesse limite (29) est réglable individuellement pour les différentes sections (s₁-sₙ).

9. Procédé selon la revendication 7,
dans lequel, pour chaque point, la vitesse limite (29) correspond à la vitesse (v) attribuée au point respectif selon la courbe de vitesse (23) de la séquence de mouvements préplanifiée.

10. Procédé selon la revendication 7,
dans lequel, pour chacune des sections (s₁-sₙ), pour chaque point de la section respective (s₁-sₙ), la vitesse limite (29) correspond à la plus grande vitesse (v) de la courbe de vitesse (23) de la séquence de mouvements préplanifiée, à l'intérieur de la section respective (s₁-sₙ).

11. Procédé selon la revendication 7,
dans lequel, pour chaque point, la vitesse limite (29) correspond à la plus grande vitesse totale (v) de la courbe de vitesse (23) de la séquence de mouvements préplanifiée.

12. Procédé selon l'une des revendications 5 à 11,
dans lequel un filtre passe-bas est appliqué aux vitesses modifiées (v) dé-terminées.

13. Procédé selon l'une des revendications précédentes,
dans lequel le nombre de répétitions dudit parcours de la séquence de mouvements préplanifiée est réglable.

14. Procédé selon l'une des revendications précédentes,
dans lequel la séquence de mouvements est améliorée de manière itérative en exécutant le procédé plusieurs fois et en utilisant la séquence de mouvements améliorée, assurée dans une itération respective, comme la séquence de mouvements préplanifiée dans l'itération respective suivante.
